# EUROPEAN PATENT APPLICATION

(11) **EP 4 807 986 A1**
(43) Date of publication of application: **16.09.2026**
(21) Application number: 26164219.3
(22) Date of filing: 12.03.2026
(51) Int. Cl.: H02S 30/00

(54) **PHOTOVOLTAIC MODULE WITH EXTRACTABLE PHOTOVOLTAIC PANELS FOR ELECTRICITY GENERATION**

(30) Priority: 13.03.2025 IT 202500005192
(71) Applicant: Gescam S.N.C. Di Geminiani Gino & C., 63087 Comunanza (AP) (IT)
(72) Inventor: GEMINIANI, Gino, 63087 COMUNANZA (AP) (IT)
(74) Representative: Cutropia, Gianluigi

(57) **Abstract**

A photovoltaic module (100) comprises: a plurality of trolleys (1) supporting a photovoltaic panel (P), a main frame (5) suitable for containing the trolleys (1), with the trolleys (1) stacked one on top of the other so as to form a stack (S) of trolleys and panels, a lifting system (6) mounted in the main frame (5) and suitable for lifting/lowering the stack (S) inside the main frame, and an extraction system (8) mounted in the main frame (5) and suitable for horizontally translating the lowest photovoltaic panel (P) of the stack (S) in order to extract or retract it from/into the main frame.

## Description

The present invention relates to a photovoltaic module with extractable photovoltaic panels for electricity generation.

Photovoltaic modules for electricity generation are well known. A photovoltaic module comprises a plurality of photovoltaic panels connected to one another in series and/or in parallel. A photovoltaic panel comprises a plurality of photovoltaic cells electrically connected to one another. A photovoltaic panel has a rectangular shape. Generally, the dimensions of standard-sized photovoltaic panels are 160-170 cm × 90-110 cm.

A photovoltaic module generally comprises a large number of photovoltaic panels, even higher than ten photovoltaic panels, which must be installed on a supporting structure.

Conventional photovoltaic modules are impaired by several logistical drawbacks regarding their installation, removal, transport, and storage.

It should be considered that the photovoltaic panels of a module must be taken one by one and mounted in a fixed and permanent manner on the supporting structure. When the photovoltaic module is no longer used, each panel must be removed by an operator and then stacked for transportation.

Evidently, the installation, removal, and transportation of the photovoltaic panels are time-consuming and complex operations. Furthermore, in order to store the photovoltaic panels, after the panels are uninstalled, the user needs to stack them one on top of the other. Also the storage is a complicated and labor-intensive operation.

Obviously, in case of a weather event that could damage the photovoltaic panels, such as hail, it is impossible for the user to uninstall all the panels in the module, thus accepting the possibility that the panels will be damaged.

Furthermore, it is unthinkable that a user could install or uninstall the panels in the module based on the energy demand of the specific moment. Therefore, the conventional photovoltaic modules sometimes produce more energy than required and sometimes less energy than required.

US2019/006984A1 describes a portable, retractable solar racking system that comprises a modular set of solar panel frames, wherein each frame comprises a solar panel, a plurality of arms, and a plurality of struts.

US2017/137210A1 describes a container for solar string transportation.

The purpose of the present invention is to eliminate the drawbacks of the prior art by providing a photovoltaic module for the production of electrical energy that is easy to install, uninstall, transport, and store.

Another objective is to provide such a photovoltaic module for the production of electrical energy that is versatile and easily modifiable and configurable according to the user needs.

These objectives are achieved in accordance with the invention with the features of the attached independent claim 1.

Advantageous embodiments of the invention are apparent from the dependent claims.

Further features of the invention will become clearer from the detailed description that follows, referring to a purely illustrative and therefore non-limiting embodiment thereof, illustrated in the attached drawings, wherein:
Fig. 1 is an exploded perspective view of the various elements of the photovoltaic module according to the invention;
Fig. 1A is an enlarged detail enclosed in circle A of Fig. 1;
Fig. 2 is a top plan view of the module of Fig. 1 in assembled configuration, in which only three panels are active;
Fig. 2A is an enlarged detail enclosed in circle A of Fig. 2;
Fig. 3 is a side view of the module of Fig. 2;
Fig. 3A is an enlarged detail enclosed in circle A of Fig. 3;
Fig. 3B is an enlarged detail enclosed in circle B of Fig. 3;

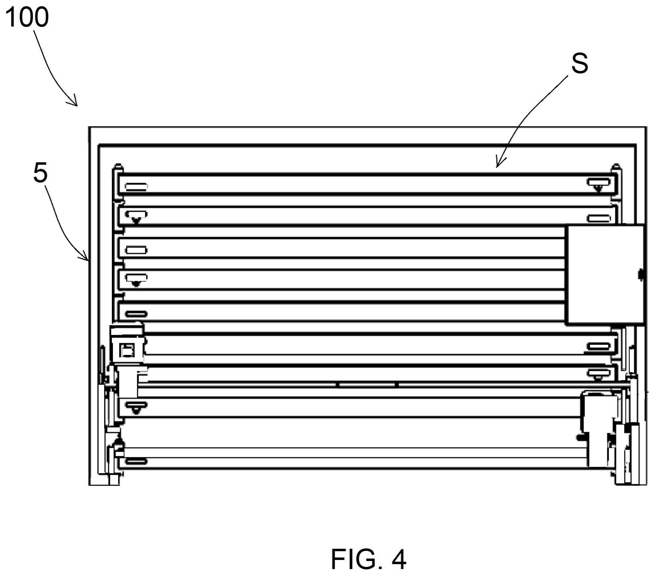

Fig. 4 is a rear view of the photovoltaic module according to the invention;
Fig. 5 is a perspective view of a trolley of the photovoltaic module according to the invention;
Fig. 6 is a perspective view of a main frame of the photovoltaic module according to the invention;
Fig. 7 is a perspective view of a lifting system of the photovoltaic module according to the invention; and
Fig. 8 is a perspective view of an extraction system of the photovoltaic module according to the invention.

With reference to the Figures, the photovoltaic module according to the invention, which is collectively designated with reference numeral 100, is described.

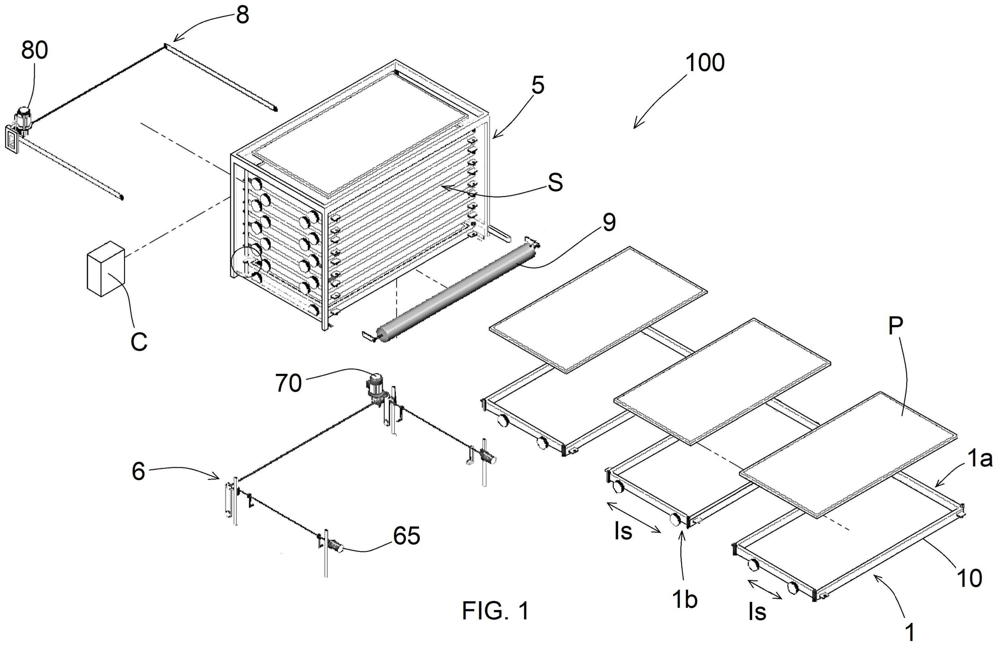

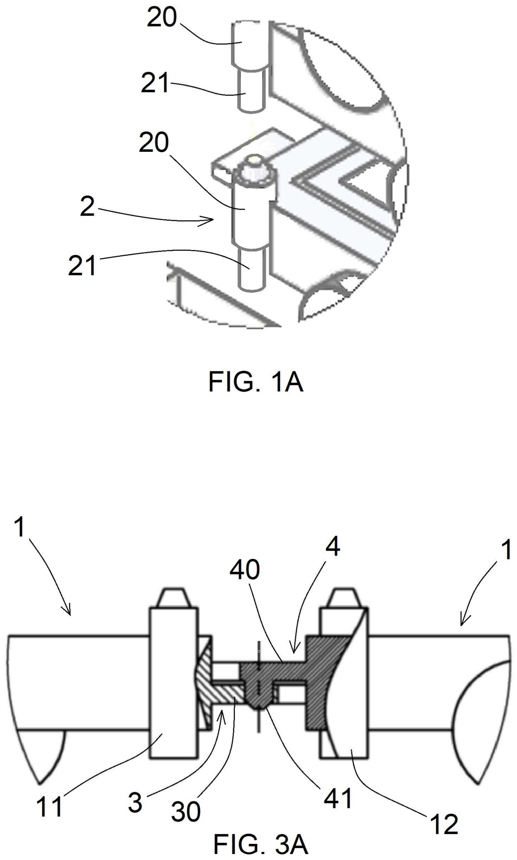

With reference to Fig. 1, the photovoltaic module (100) comprises:
- a plurality of trolleys (1), wherein each trolley (1) supports a photovoltaic panel (P),
- a main frame (5) suitable for containing the trolleys (1) in an arrangement with the trolleys (1) stacked one on top of the other in such a way to form a stack (S) of trolleys and photovoltaic panels,
- a lifting system (6) mounted in the main frame (5) and suitable for lifting/lowering the stack (S) inside the main frame,
- an extraction system (8) mounted in the main frame (5) and suitable for translating the lowest trolley (1) of the stack (S) horizontally to extract or retract it from/into the main frame.

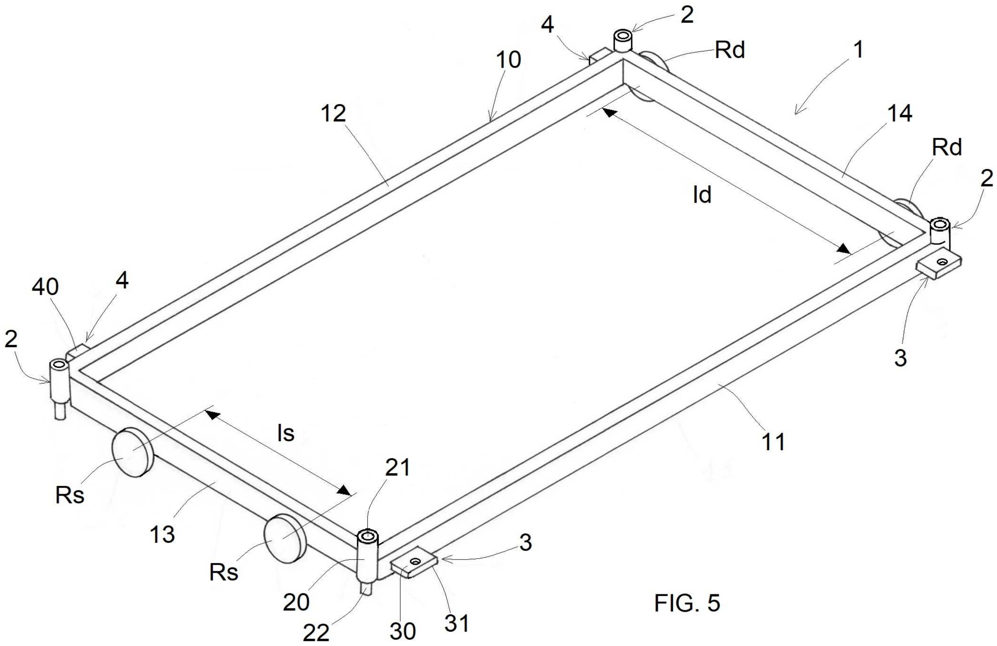

With reference to Fig. 5, the trolley (1) comprises a rectangular frame (10) comprising a front section (11), a rear section (12), a left lateral section (13), and a right lateral section (14). The front and rear sections (12) are longer than the lateral sections (13, 14).

The frame (10) of the trolley is mounted on wheels (R). The trolley comprises two left wheels (Rs) rotatably mounted in the left lateral section (13) and two right wheels (Rd) rotatably mounted in the right lateral section.

The left wheels (Rs) have a center-to-center distance (Is) and the right wheels (Rd) have a center-to-center distance (Id).

As shown in Fig. 1, a first trolley is designated as (1a) and a second trolley is designated as (1b).

To prevent the left and right wheels (Rs, Rd) of the first trolley (1a) from interfering with the left and right wheels (Rs, Rd) of the second trolley (1b) when the two trolleys are stacked, the center-to-center distance (Is) of the left wheels of the first trolley (1a) differs from the center-to-center distance (Is) of the left wheels of the second trolley (1b), and similarly, the center-to-center distance (Id) of the right wheels of the first trolley (1a) differs from the center-to-center distance (Is) of the left wheels of the second trolley (1b). Thus, adjacent trolleys have center-to-center distances (Is) of the left wheels that differ from one another and center-to-center distances (Id) of the right wheels that differ from one another.

Returning to Fig. 5, the trolley (1) comprises fixing means (2) arranged in the frame (10) to secure the frame of a trolley to the frame of another trolley when the two trolleys are stacked.

The fixing means (2) comprise sleeves (20) arranged at the corners of the frame. The sleeves (20) have a hole (21) open at the top. The fixing means (2) comprise a pin (22) that protrudes downward from the sleeve (20) to engage in the hole (21) of a sleeve of an underlying trolley, as shown in Fig. 1A.

The trolley (1) comprises front coupling means (3) protruding anteriorly from the front section (11) and rear coupling means (4) protruding posteriorly from the rear section (12). In of the above, the rear coupling means (4) of a trolley can engage with the front coupling means (3) of another trolley when the two trolleys are arranged one behind the other on a horizontal plane.

The front coupling means (3) comprise at least one plate (30) having a hole (31). The rear coupling means (4) comprise at least one support (40) having a pin (41) (Fig. 1A) that protrudes inferiorly from the support (40) to engage in the hole (31) of the plate of the front coupling means.

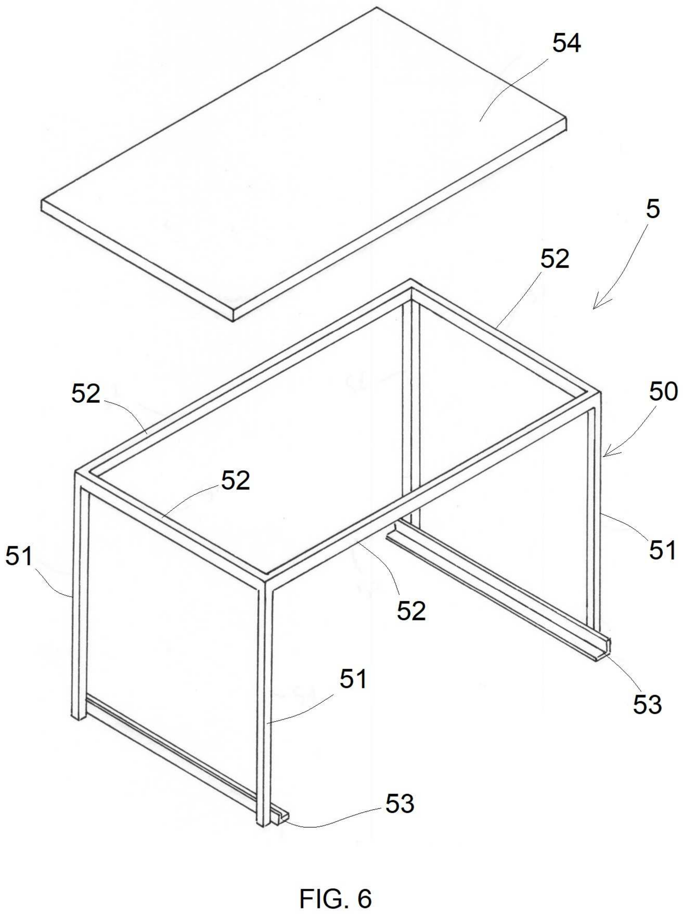

With reference to Fig. 6, the main frame (5) comprises a parallelepiped structure (50) comprising four uprights (51) connected by four crossbars (52). Two guide rails (53) are arranged horizontally at a base of the uprights (51) to guide the wheels (Rs, Rd) of the trolley (1) inside the main frame (5). The main frame (5) may comprise a cover (54) arranged on the crossbars (52) to cover the stack (S) inside the main frame.

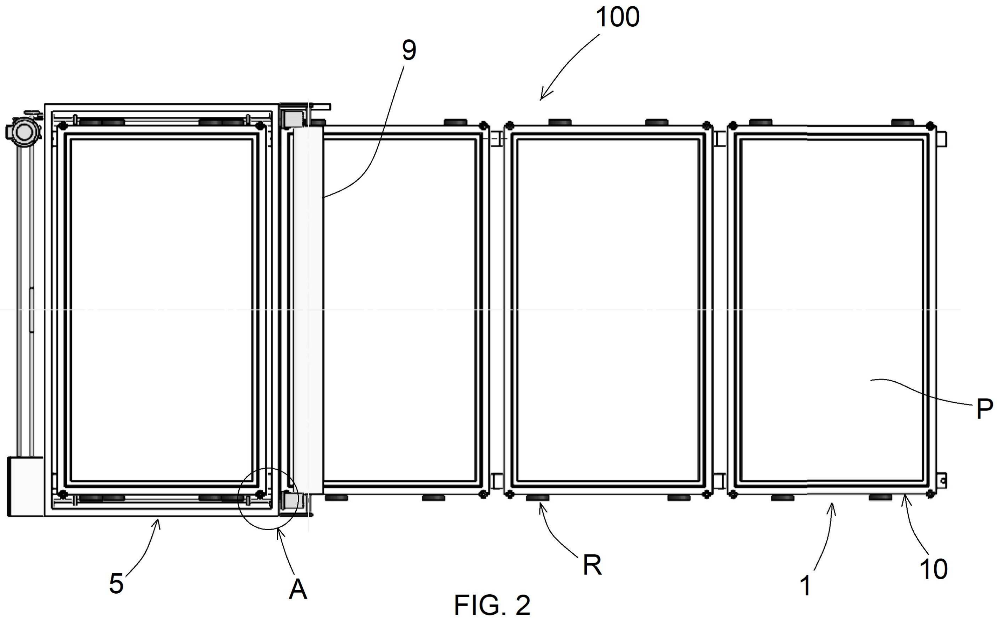

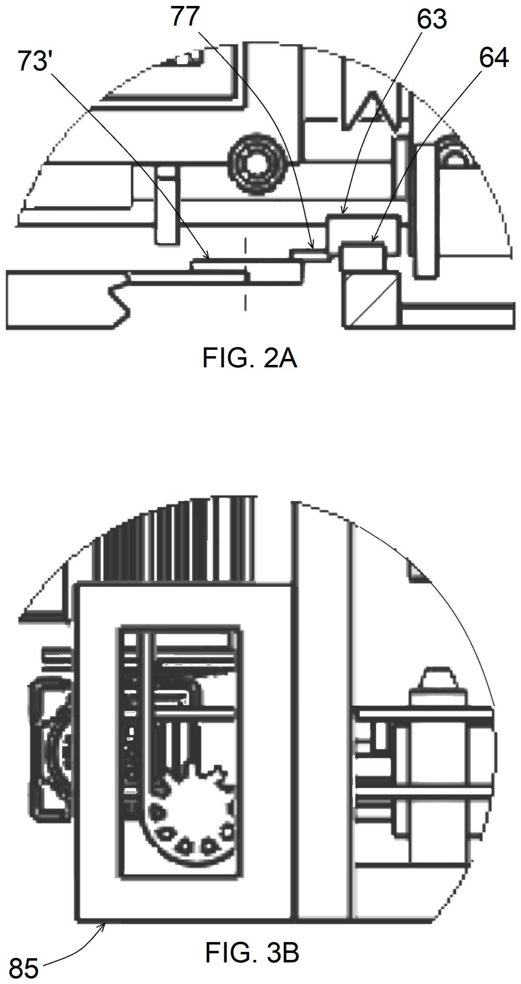

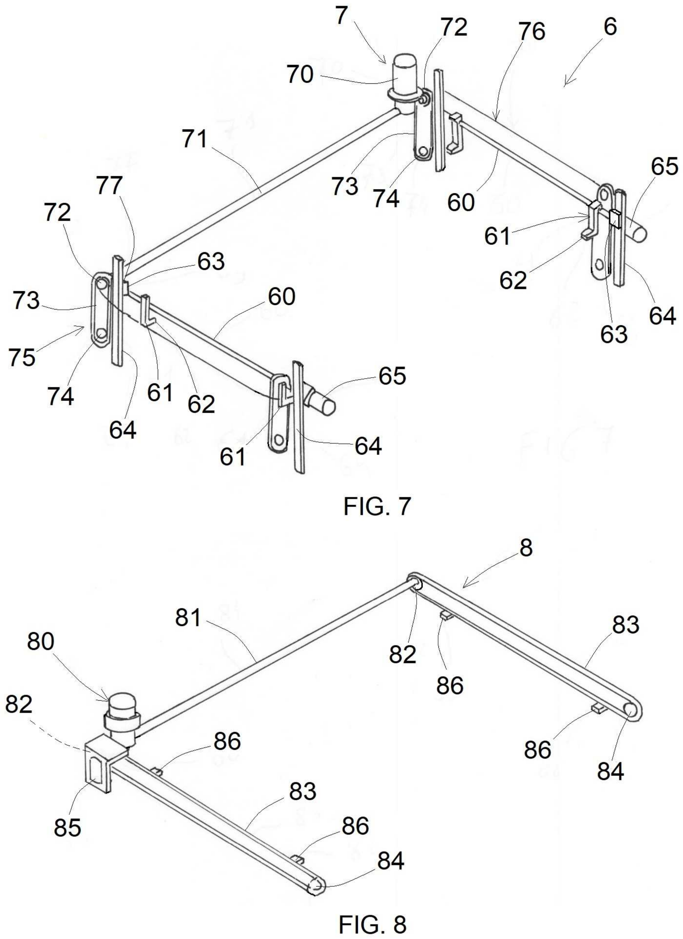

With reference to Figs. 7 and 2A, the lifting system (6) comprises two rods (60) arranged horizontally. Fastening means (61) are connected to the rods (60) for fastening the frame (10) of the trolley. The fastening means (61) may be L-shaped brackets having a lower part (62) suitable for being positioned beneath the left and right sections (13, 14) of the frame of the trolley in order to lift the trolley.

The rods (60) are mounted in slides or runners (63) that slide vertically in vertical guides (64) fixed to the main frame (5).

The rods (60) are rotated by actuators (65), such as electric motors, so that the fastening means (61) can go from a fastening position, wherein the lower part (62) of the fastening means is beneath the lateral sections of the trolley, to a releasing position, wherein the lower part (62) of the fastening means does not interfere with the lateral sections of the trolley, thereby releasing the trolley from the fastening means. In such a case, the rods (60) are rotatably mounted in the slides (63).

The lifting system (6) comprises driving means (7) suitable for moving the slides (63) along the vertical guides (64). The driving means (7) comprise an electric motor (70) mounted in the main frame (5) to drive a chain drive (75) connected to the slides (63) in order to move the slides vertically.

The chain drive (75) comprises four vertical chains (73) connected to respective slides (63) and two horizontal chains (76) that connect two vertical chains, respectively.

The electric motor (70) rotates a shaft (71) whereon two pinions (72) are mounted, meshing with respective vertical chains (73). Each vertical chain (73) is returned by a sprocket wheel (74) in endless loop configuration, so as to be arranged vertically. Each vertical chain (73) is connected to a respective slide (63) by means of a connection (77).

Although Fig. 7 illustrates a chain drive (75), another type of drive, such as a rack and pinion drive or a lead screw drive, may be provided between the electric motor (70) and the slides (63).

The lifting system (6) is arranged in a lower portion of the main frame (5), so that the fastening means (61) can fasten the lowest trolley of the stack (S), which is positioned with the wheels (Rs, Rd) on the guide rails (53) of the main frame. Thus, the lifting system allows the lowest trolley of the stack (S) to be lifted, leaving a sufficient space between the guide rails (53) and the lowest trolley of the stack for the insertion of another trolley (1) that supports a photovoltaic panel (P).

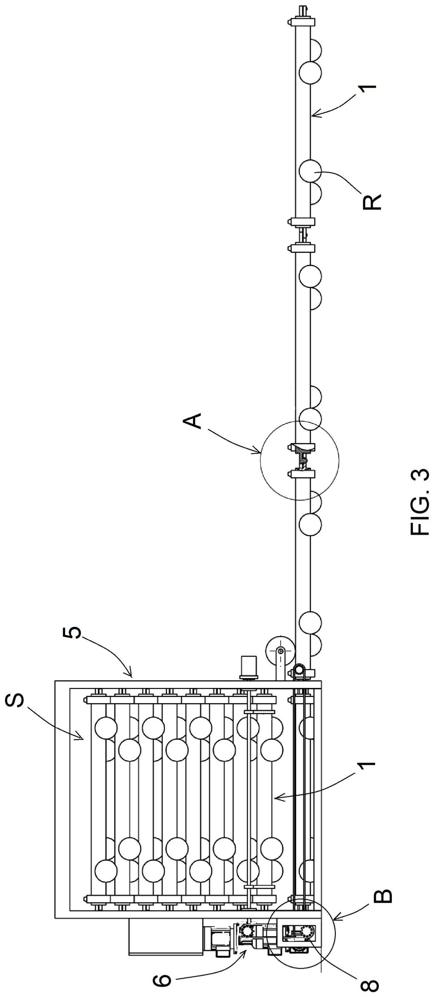

With reference to Figs. 8 and 3B, the extraction system (8) comprises a motor (80) that rotates a shaft (81), which in turn rotates two chains (83) arranged horizontally. The chains (83) are suitable for fastening a frame (10) of a panel for transportation. For such a purpose, the chains (83) are provided with coupling pins (86) suitable for coupling with the frame (10) of the photovoltaic panel.

The motor (80) is connected to a support (85) fixed to the main frame (5). The shaft (81) has two pinions (82) that mesh with the chains (83). The chains (83) are returned by respective pulleys (84) in order to be disposed in a horizontal configuration.

Going back to Fig. 1, the photovoltaic module (100) comprising a cleaning roller (9) positioned at an anterior part and at an inferior part of the main frame (5) in such a way to roll over a photovoltaic panel (P) that is inserted into the main frame.

Finally, the photovoltaic module (100) comprises a control unit (C) electrically connected to the electric motors (70, 65, 80) of the lifting system (6) and of the extraction system (8).

Numerous variations and detailed modifications can be made to the present embodiment of the invention, within the reach of a person skilled in the art, however falling within the scope of the invention as expressed by the appended claims.

## Claims

1. Photovoltaic module (100) comprising:
- a plurality of trolleys (1), wherein each trolley (1) supports at least one photovoltaic panel (P),
- a main frame (5) suitable for containing the trolleys (1) in an arrangement with the trolleys (1) stacked one on top of the other in such a way to form a stack (S) of trolleys and photovoltaic panels,
- a lifting system (6) mounted in the main frame (5) and suitable for lifting/lowering the stack (S) of trolleys and panels inside the main frame, and
- an extraction system (8) mounted in the main frame (5) and suitable for translating the lowest trolley (1) of the stack (S) horizontally in order to extract or retract it from/into the main frame.

2. The photovoltaic module (100) according to claim 1, wherein said trolley (1) comprises a rectangular frame (10) comprising a front section (11), a rear section (12), a left lateral section (13) and a right lateral section (14) and wheels (R) supporting said frame (10).

3. The photovoltaic module (100) according to claim 2, wherein said trolley (1) comprises two left wheels (Rs) rotatably mounted in the left lateral section (13) and two right wheels (Rd) rotatably mounted in the right lateral section; wherein the center-to-center distance (Is) of the left wheels (Rs) differs from the center-to-center distance (Id) of the right wheels (Rd).

4. The photovoltaic module (100) according to claim 2 or 3, wherein said trolley (1) comprises fixing means (2) arranged in the frame (10) to secure the frame of a trolley to the frame of another trolley when the two trolleys are stacked.

5. The photovoltaic module (100) according to any of claims 2 to 4, wherein said trolley (1) comprises front coupling means (3) protruding anteriorly from the front section (11) and rear coupling means (4) protruding posteriorly from the rear section (12), in such a way to engage the rear coupling means (4) of a trolley with the front coupling means (3) of another trolley, when the two trolleys are arranged one behind the other on a horizontal plane.

6. The photovoltaic module (100) according to any of claims 2 to 5, wherein the main frame (5) comprises a parallelepiped structure (50) comprising four uprights (51) connected by four crossbars (52), and two guide rails (53) are arranged horizontally at a base of the uprights (51) to guide the wheels (R) of the trolley (1) inside the main frame (5).

7. The photovoltaic module (100) according to any of the preceding claims, wherein the lifting system (6) comprises:
- fastening means (61) suitable for fastening a trolley (1) when it is arranged inferiorly in the main frame (5), and
- driving means (7) suitable for moving the fastening means (61) to lift the trolley
- a transmission (75) connecting the driving means (7) to the fastening means.

8. The photovoltaic module (100) according to claim 7, wherein said lifting system (6) comprises:
- two rods (60) arranged horizontally and connected to the fastening means (61), and
- slides or runners (63) supporting the rods (60) and mounted in such a way to slide vertically in vertical guides (64) attached to the main frame (5), and
said driving means (7) comprise an electric motor (70) mounted in the main frame (5) to drive a chain drive (75) connected to the slides (63) in order to move the slides vertically.

9. The photovoltaic module (100) according to claim 8, wherein said rods (60) are rotatably mounted in said slides (63) and said lifting system (6) comprises actuators (65) that rotatably move said rods (60) so that the fastening means (61) can go from a fastening position, wherein the trolley is fastened, to a releasing position, wherein the trolley is released.

10. The photovoltaic module (100) according to any of the preceding claims, wherein the extraction system (8) comprises a motor (80) that rotates a shaft (81), which in turn rotates two chains (83) arranged horizontally and configured to fasten a trolley.
